# EUROPEAN PATENT APPLICATION

(11) **EP 4 000 480 A1**
(43) Date of publication of application: **25.05.2022**
(21) Application number: 20209396.9
(22) Date of filing: 24.11.2020
(51) Int. Cl.: A47J 37/06

(54) **STEAM COOKING APPARATUS AND METHOD**

(71) Applicant: Koninklijke Philips N.V., 5656 AG Eindhoven (NL)
(72) Inventor: SCHRETTLINGER, Joachim, 5656 AE Eindhoven (NL); MURBACHER, Werner Karl, 5656 AE Eindhoven (NL)
(74) Representative: Kapoor, Pavan Puneet

(57) **Abstract**

A steam cooking apparatus (10) has a transparent lid (13) which comprises a first, inner glass plate (80) and a second, outer, glass plate (82), separated by an air spacing of at least 5 mm

## Description

### FIELD OF THE INVENTION

This invention relates to a steam cooker (also referred to as a steamer) and steam cooking method.

### BACKGROUND OF THE INVENTION

Steam cooking (also referred to as steaming) is commonly known as one of the healthiest cooking methods. In particular, steam cooking is often preferred over other cooking methods such as boiling, frying and baking because it results in a lower amount of nutrient destruction.

This is because steam cooking operates at a lower temperature, below 100 degrees Celsius, but nevertheless enables short cooking times due to the wet steam environment. The presence of water as the cooking medium causes a leaching out of water soluble nutrients when boiling, and this is greatly reduced by steam cooking.

A known steam cooker is described in WO 2020/148187. One of the functions of this design is to provide clear view of the food during the cooking process through a transparent lid.

Little to no condensation on the see-through lid can be achieved by controlling the cooking conditions, in particular the specific humidity and temperature and the air flow. For example, the airflow is generated by a fan which pushes air through a vent at the top of the backside wall of the cooking chamber. The vent extends along the width of the lid and guides the air flow along the length of the lid, which is longitudinally inclined.

The steamer is for example designed for cooking methods featuring chamber temperatures up to 160°C. For all cooking conditions, various regulations have to be fulfilled. For example, a temperature limit may be set for the glass lid surface of 95°C. A temperature limit for the handle on the glass for porcelain or vitreous material may be 70°C and for rubber or of plastic 85°C.

These conditions present difficulties in the design of the see-through lid.

### SUMMARY OF THE INVENTION

The invention is defined by the claims.

According to examples in accordance with an aspect of the invention, there is provided a steam cooking apparatus, comprising:
a food chamber;
a transparent lid;
a heating arrangement;
a water reservoir;
a circulation system comprising an extraction vent through which air is drawn from inside the food chamber, and a delivery vent arrangement for delivering air to the food chamber,
wherein the transparent lid comprises a first, inner glass, plate and a second, outer, glass plate, separated by an air spacing of at least 5mm

The lid is made from two glass plates with air between them. This lid design has been found to provide the required thermal control to meet the temperature requirements at the outer surface of the lid, while enabling the contents of the food chamber to be viewed. The sandwich design is in particular designed in such a way that the thermal gradients result in an acceptable outer temperature when in steady state, according to applicable standards and risk assessments. For example, a heat transition from the food chamber temperature of around 160°C to an outside glass surface temperature of around 95°C can be achieved.

The apparatus for example has a water dosing system for delivering water to the heating arrangement.

The first and second plates are for example between 2mm and 5mm thick.

The air spacing is for example at least 7mm, for example at least 10mm.

These dimensions enable a lightweight lid which can however achieve the desired thermal insulation properties.

The outer surface of the second plate is for example flat. The first plate may also be flat so that they are parallel with a fixed spacing between them. This provides a non-distorted view of the inside of the food chamber.

The space between the first and second plates is for example ventilated. This provides a cooling function.

A lid frame is preferably provided to which the first and second plates are fixed. This provides a rigid coupling between the plates. It is preferably made of plastic, with a low thermal conductivity.

A seal is then preferably provided around the first plate, which holds the first plate to the lid frame, wherein the seal has a lower lip for sealing a top opening of the food chamber.

The same seal thus holds the first plate to the lid structure as well as sealing the food chamber. The top opening of the food chamber is for example planar and the seal for example comprises a steel core coated with silicone. An overlap of the seal over the first plate of around 3mm may be provided resulting in a functional tolerance range of +/- 1.5mm. The first plate is thus fixed to the lid frame by the seal whereas the second plate may for example be rigidly fixed to the lid frame.

The lower lip of the seal is for example adapted to release overpressure in the food chamber. The seal thus provides an additional safety function.

The lid preferably has a spring-loaded hinge for coupling to the food chamber and a latch arrangement, and the second plate has an actuation area for touching by a user to open the lid by releasing the latch arrangement and to close the lid.

A spring-loaded hinge enables the user to open/close the device in an ergonomic way. The spring characteristic is specified in such a way as to set the appropriate forces for balancing the weight of the entire lid. The actuation area is for example at an opposite region of the lid to the hinge.

The food chamber may comprise a base, a rear wall area, first and second opposing side wall areas and a front wall area, wherein the extraction vent is in the rear wall area.

This is the same area of the lid as the hinge for opening the lid, and hence away from the area touched by the user to open the lid.

The transparent lid is for example inclined downwardly from the rear wall area towards the front wall area. This promotes the flow across the inside surface of the lid.

In one example, the lid air spacing has an external opening adjacent the front wall area and an ambient opening adjacent the rear wall area to create a convection airflow through the lid air spacing.

Thus, convection flow using external air provides cooling.

In another example, the lid air spacing has an internal opening adjacent the front wall area and an internal opening adjacent the rear wall area, and the circulation system is for creating a force airflow through the lid air spacing. The internal opening opens to an inside space of the cooker, but is vented to the exterior at a different location, such as the base of the cooker.

This forced flow provides cooling, with air flow driven by the circulation system.

In another example, the lid air spacing is present all around the outer periphery of the lid. The lid thus has an outer (second) plate suspended above an inner (first) plate at a distance. The outer plate functions as a shield as is cooled by the free flow of air between the two plates.

In all examples, the first plate may comprise a reflecting coating for reflecting infrared radiation. This provides additional resistance to heating of the outer surface of the lid.

The steam cooking apparatus preferably also comprises a feed arrangement for providing water from the water reservoir into contact with a heated surface of the first heater.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a cooking apparatus;
Fig. 2 shows the food chamber opened up to show the rear wall area and the first and second side wall areas;
Fig. 3 shows how a sloped top may further assist in providing flow across the transparent lid;
Fig. 4 shows a cooking apparatus with the lid open;
Fig. 5 shows the lid;
Fig. 6 shows the structure of the lid in more detail;
Fig. 7 shows the design of the seal in more detail in the vicinity of the hinge;
Fig. 8 shows the design of the seal in more detail in the vicinity of the actuation area;
Fig. 9 shows results of a test to compare different lid designs;
Fig. 10 shows a first example of a ventilation arrangement;
Fig. 11 shows a second example of a ventilation arrangement;
Fig. 12 shows a third example of a ventilation arrangement; and
Fig. 13 shows a fourth example of a ventilation arrangement.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a steam cooking apparatus having a transparent lid which comprises a first, inner glass, plate and a second, outer, glass plate, separated by an air spacing of at least 5mm

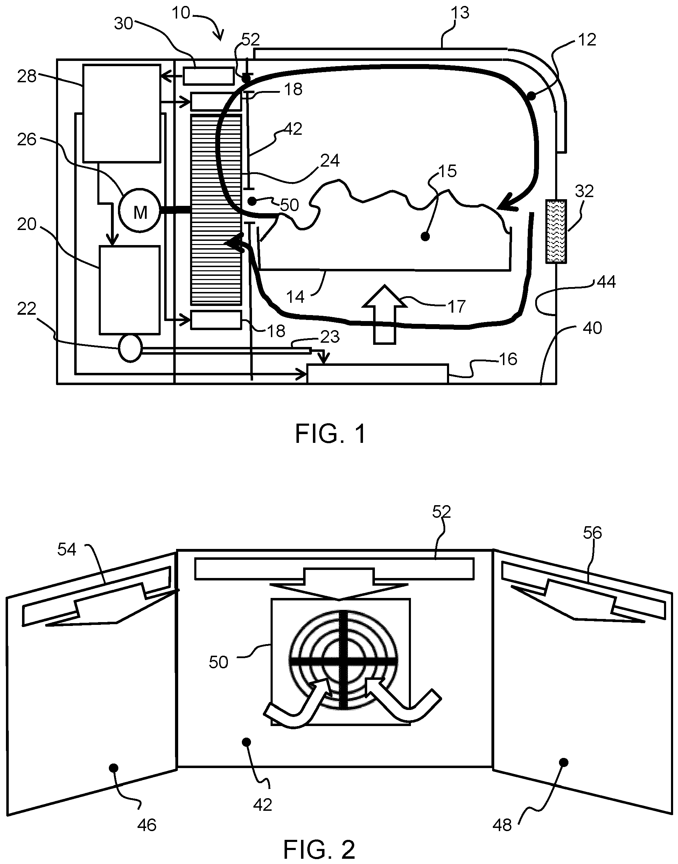

The known type of steam cooking apparatus for which the lid is designed will first be described with reference to Figs. 1 to 3.

Fig. 1 shows a cooking apparatus 10, comprising a food chamber 12 in which a food basket 14 is mounted. The food chamber has a viewing window 13 which may also be the openable lid of the apparatus. Food 15 to be cooked is placed on the food basket which then places the food near the center of the food chamber. The food basket has air permeable side walls and optionally an air permeable base so that air and steam can circulate through the basket to the food.

There is a heating arrangement which in this example comprises a first heater 16 and a second heater 18. The first heater is used to generate steam (shown as arrow 17) from water which is delivered from a water reservoir 20 by a dosing system 22. The dosing system provides water to a feed arrangement 23 which delivers water to a surface of the first heater 16 to generate steam.

The dosing system may deliver a constant flow of water during cooking or a regularly pulsed delivery of water (so needing no feedback control), but it could also be controlled dynamically during cooking using feedback from a humidity sensor.

A circulation system is provided in the form of a fan 24 and motor 26. The circulation system circulates the steam generated by the first heater 16 around the food chamber. The second heater 18 is along the circulation path and thereby further heats the steam to create a high temperature dry steam environment. The circulation system thus moves the saturated air inside the chamber to the food to increase convection and also assists in producing a homogeneous temperature field of all parts inside the cooking chamber, including the viewing window. This is to avoid condensation.

The apparatus is controlled by a controller 28, which controls the heating arrangement 16, 18 and optionally also the dosing system 22. The controller receives temperature information from a temperature sensor 30. The temperature of interest is the temperature at the center of the food chamber, where the food is located. However, the temperature sensor, which may be a negative temperature coefficient (NTC) temperature sensor, may be located anywhere in the food chamber, with a known correlation between the temperature at the sensor location and the temperature in the middle of the chamber.

The temperature is for example regulated by switching on and off the second heater 18 of the heating arrangement by the controller. The temperature of the first heater, for steam generation, is regulated by a thermostat again by cycling on and off. These two control mechanisms may be independent.

The cooking chamber is vented to the ambient surroundings by vents 32. Thus, the cooking chamber remains at substantially atmospheric pressure during use.

The controller 28 controls the heating arrangement to heat water from the water reservoir to create steam using the first heater 16, and to further heat the steam to create heated steam at a temperature around 100 degrees.

The applicant has also proposed an approach in which the second heater further heats the steam for example to 120 degrees Celsius, or in the range 110 to 120 degrees Celsius. This approach may also be adopted.

The circulation system circulates the heated steam around the food chamber. The vent or vents of the cooking chamber maintain the pressure at ambient pressure, and thus steam can escape when the maximum possible absolute humidity is reached (for the particular operating temperature), which would otherwise result in an increase in pressure.

The release mechanism provided by the vent or vents means that the steam delivery rate does not need to be controlled, and instead there can be a preset water delivery rate to the first heater 16. The controller may for example implement a control sequence which determines particular points of time when steam generation starts and/or ends. By way of example, a time-delayed start may be used for steam generation. The device is for example in a waiting mode for certain time e.g. 2 minutes from the start or else waiting until the cooking chamber temperature reaches 100°C. Water is then added to the first water heater 16. This pre-heating improves the avoidance of condensation at the window of the transparent lid as discussed below.

The food chamber 12 comprises a base 40, a rear wall area 42, first and second opposing side wall areas and a front wall area 44. These together define a closed chamber.

Fig. 2 shows one example of the food chamber opened up to show the rear wall area 42 and the first and second side wall areas 46, 48 for a first example of vent arrangement.

The circulation system draws air out of the food chamber through an extraction vent 50 in the rear wall area 42. This vent leads to the fan blades.

A delivery vent arrangement for delivering air (and steam) comprises a first delivery vent 52 at a top region of the rear wall area 42 above the extraction vent 50. In this example, a second delivery vent 54 is at a top region of the first side wall area 46 and a third delivery vent 56 is at a top region of the second side wall area 48. It shall be noted that not all the delivery vent 52, 54 and 56 are necessary, the cooking apparatus 10 could be operated properly with only the delivery vent 52 formed at the top region of the rear wall area 42 by setting up appropriate operating parameters, like air flow rate, the temperature, etc.

The delivery vent 52 is for delivering hot air or hot steam, and thus nearer to the delivery vent 52, the higher temperature of the heating medium.

Again, referring to Fig. 1. The delivery vent 52 is formed at the top region of the rear wall are 42, and thus the delivery vent 51 is formed between the lid (13) and the extraction vent 50 when viewing from Fig. 1, i.e, viewing in a vertical direction.

These vents are the only entry points for air/steam driven by the circulation system. Thus, it is possible through design of the vents and fan to control the circulation of air and steam within the food chamber in a reliable and repeatable way.

The arrangement of vents enables a flow of the delivered air to pass over the full area of the underside of the lid 13. The viewing window area of the lid 13 has increased heat losses compared to an insulated wall so it is desirable for the window to be exposed to the flow created by the circulation system to maintain the viewing window above the dew point.

WO 2020/148187 discusses in detail various possible vent designs.

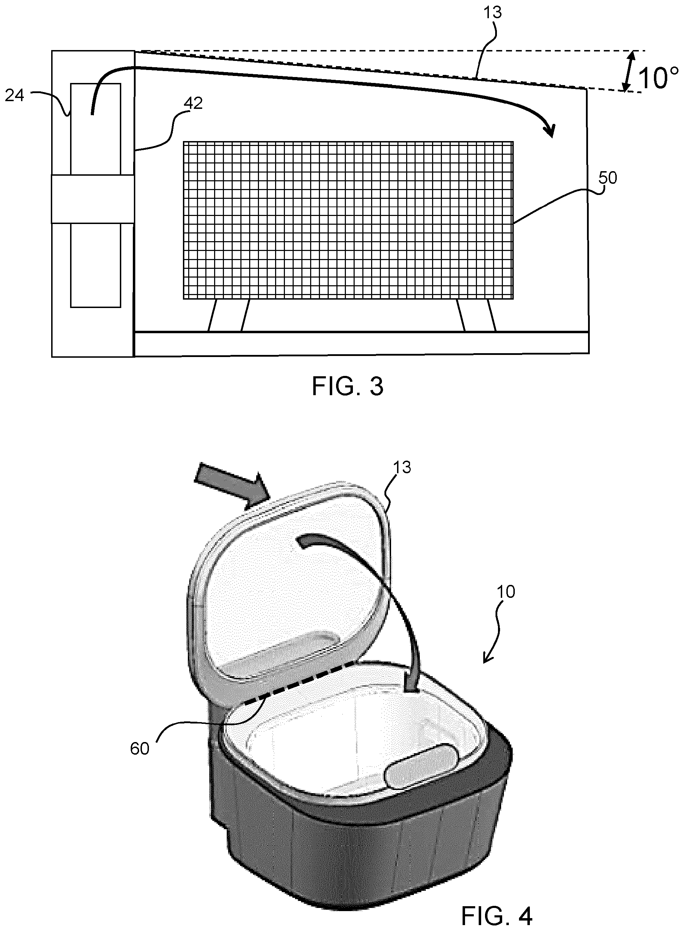

Fig. 3 shows that the top of the cooking apparatus, and hence the top and the underside of the lid, are sloped downwardly away from the rear wall area 42. This may further assist in retaining flow across and against the full area of the underside of the transparent lid 13. The slope is for example 10 degrees as shown in Fig. 3, for example in the range 5 degrees to 20 degrees.

The aim of the overall design is to limit and preferably even prevent condensation of steam at the transparent section of the lid via heating. Specific heating parameters (humidity and temperature levels e.g. <120°C for specific cooking programs) are dictated by the cooking process, giving specific restrictions to the heating up of the lid surface. Some of these heating parameters will not allow complete prevention of condensation but the arrangement of the invention will at least provide an improvement.

This invention relates in particular to the design of the transparent lid.

Fig. 4 shows the cooking apparatus 10 with the lid 13 open. The lid has a spring-loaded hinge 60 at the back. The lid is made from two glass plates with an air spacing between. The spring-loaded hinge enables the user to open and close the lid in an ergonomic way. The spring characteristic is specified in a such way as to balance the forces appropriately with the weight of the entire lid. The glass design enables the consumer to see the food in the cooking chamber. The sandwich design is designed such that the heat thermal properties result in acceptable outer temperatures in the steady state. For example, a heat transition from the food chamber temperature level of around 160°C to an outside glass surface temperature of around 95°C can be achieved.

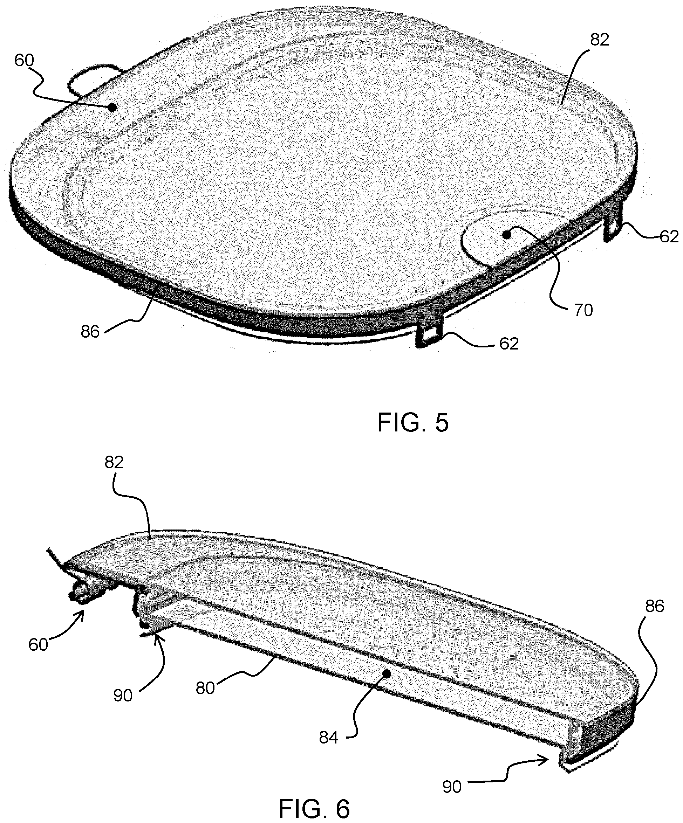

Fig. 5 shows the lid. The spring-loaded hinge 60 is at the back, and a latch arrangement locks the lid closed when it is pushed down. Tabs 62 at the front of the lid (opposite the hinge) form part of the latch arrangement. They engage with a corresponding part in the main housing of the cooker. Pushing the lid down again releases the latch arrangement and the spring force can then open the lid. Thus, the lid does not need a pull handle, but instead has a planar actuation area 70 for touching by a user, to open the lid by releasing the latch arrangement and to close the lid.

The actuation area 70 is at an opposite region of the lid to the hinge and it may comprise a printed indicator over the outer glass plate or it may comprise a portion of different material to the outer glass plate.

Fig. 6 shows the structure of the lid in more detail, with a first, inner, glass plate 80 and a second, outer, glass plate 82 separated by an air spacing 84 of at least 5mm The outer surface of the second plate 82 may be flat to provide a best viewing window. Both plates may be flat and parallel to each other. The glass plates are for example tempered glass to provide scratch resistance.

The first plate 80 may have a reflecting coating for reflecting infrared radiation. This provides additional resistance to heating of the outer surface of the lid. The coating could be a tin-oxide layer that reflects infrared radiation and that comprises antimony, the tin-oxide layer being formed as a single-layer reflection layer that is transparent in the visible region.

The first and second plates are for example between 2mm and 5mm thick and air spacing is for example at least 7mm, for example at least 10mm. These dimensions enable a lightweight lid which can however achieve the desired thermal insulation properties.

The first and second plates 80,82 are coupled together to form a unitary structure by a lid frame 86, to which the first and second plates are fixed. A seal 90 around the first plate holds the first plate 80 to the lid frame 86. The frame is plastic to provide freedom in design, to block heat transfer and to provide a lightweight assembly. Low weight is important to minimize the weight of the total device and to hold the opened lid in position. The plastic frame 86 forms, together with the glass plates, the stiffness required for the lid.

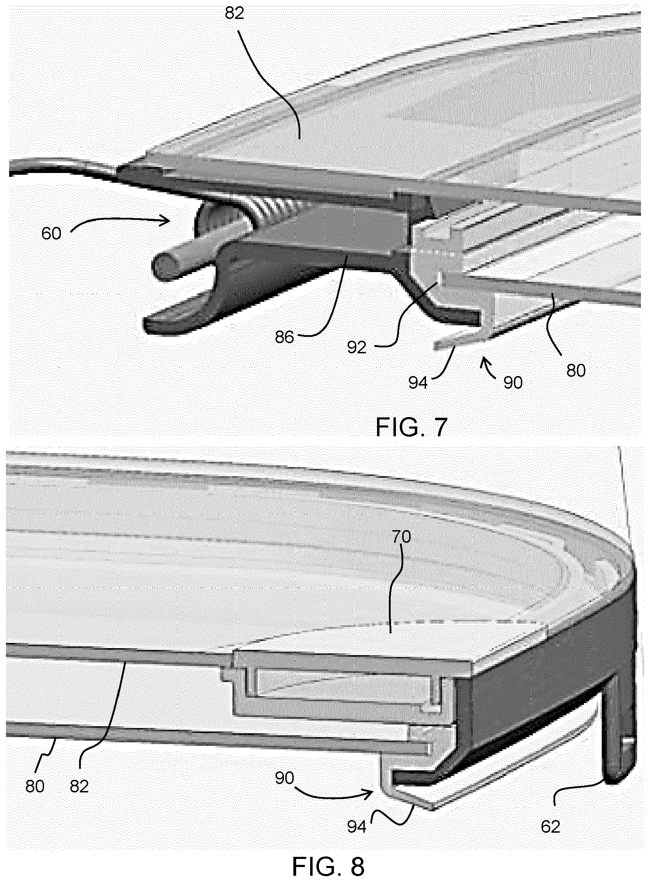

Fig. 7 shows the design of the seal 90 in more detail in the vicinity of the hinge 60.

The seal 90 has a inward facing channel 92 for receiving an outer edge of the first plate 80. An outer periphery of the seal is received in a channel of the frame 86. Thus, the first plate 80 is coupled to the frame 86 by the seal 90. The seal also has a lower lip 94 for sealing a top opening of food chamber. The lower lip 94 of the seal is for example designed to release overpressure in the food chamber. In particular, it is not fully compressed when the lid is closed, and a high internal pressure in the food chamber can further deform the seal lip, to break the seal and release an overpressure.

The seal 90 thus holds the first plate 80 to the lid structure as well as sealing the food chamber. The seal for example comprises a steel core coated with silicone. An overlap of the seal over the edge of the first plate in the channel 92 is around 3mm resulting in a functional tolerance range of +/- 1.5mm. The seal 90 also provides a heat blocking function from the first plate to the second plate.

The second plate 82 is rigidly fixed to the lid frame 86 for example by gluing.

In the vicinity of the hinge, the second plate 82 extends beyond the first plate 80 so that the second plate covers the hinge structure. The outer surface of the lid may thus extend over the total top side of the cooking apparatus. It provides sight to the food and it is easy to clean.

The outer rim of the second glass plate is for example coated to hide areas where the second plate is glued to the frame and to hide the hinge structure. This may be a screen printed pattern.

Fig. 8 shows the design of the seal 90 in more detail in the vicinity of the actuation area 70. In this example, the actuation area is an insert, for example of plastic, but it may instead simply be a marking on the surface of the second plate. For porcelain or vitreous material, a maximum temperature should be 70 degrees Celsius, and for rubber or plastic material, a maximum temperature should be 85 degrees Celsius.

The same channel structure and sealing lip is defined by the seal 90 as at the hinge side.

Fig. 8 also shows one of the tabs 62 of the latch arrangement.

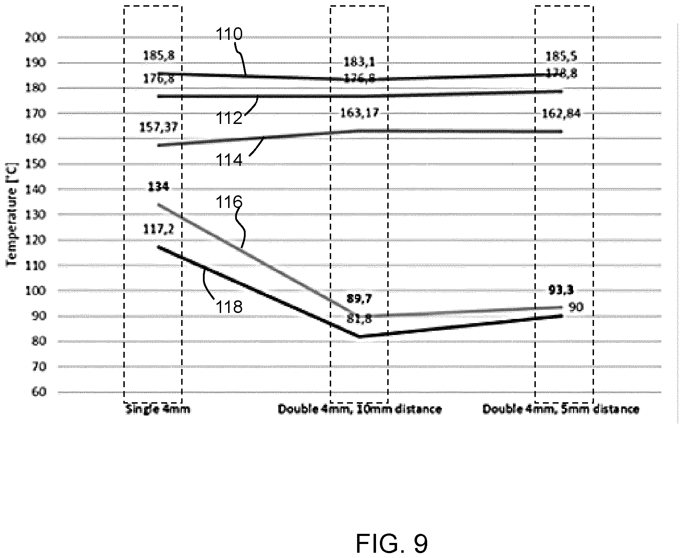

Fig. 9 shows results of a test to compare different lid designs.

The left column of values shows measured temperatures for a single glass 4mm lid. The middle column shows temperatures for a double glass lid with 4mm thickness and 10mm spacing. The right column shows temperatures for a double glass lid with 4mm thickness and 5mm spacing.

The plots show the air inlet temperature (plot 110), the temperature at the front of the cooking chamber (plot 112), the chamber temperature at a food location position (plot 114), the hottest spot temperature on the second glass plate (plot 116) and the coolest spot temperature on the second glass plate (plot 118).

The best results are achieved by a double glass lid with glass thickness of 4mm and a spacing of 10mm. A spacing of 5mm may be considered as a lower threshold.

The space between the first and second plates may be ventilated to assist cooling of the second plate. Various possible designs are, and some are discussed below.

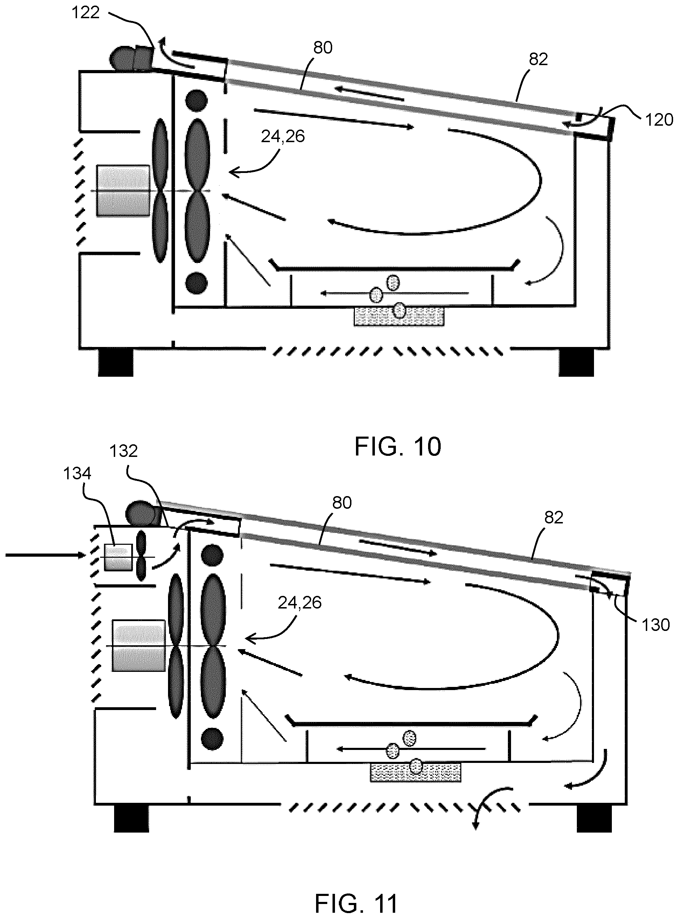

Fig. 10 shows an example in which the lid air spacing has an external opening 120 (i.e. opening into the ambient surroundings) adjacent the front wall area and another external, ambient, opening 122 adjacent the rear wall area to create a convection airflow through the lid air spacing. The openings may simply be holes in the second plate or they may be formed as part of the frame or seal. This design provides a convection flow using external air to assist in cooling.

Fig. 11 shows an example in which the lid air spacing has an internal opening 130 (i.e. opening into the body of the cooking apparatus rather opening to the ambient surroundings) adjacent the front wall area and another internal opening 132 adjacent the rear wall area, and the circulation system is for creating a forced airflow through the lid air spacing. This forced air flow may be driven by a dedicated fan 134 which drives cooling air into the rear part of the lid, along the lid towards the front part. In the example shown, the air is routed after the opening 130 to the base of the cooking apparatus where it is released.

This forced flow provides cooling, with air flow driven by a dedicated circulation system.

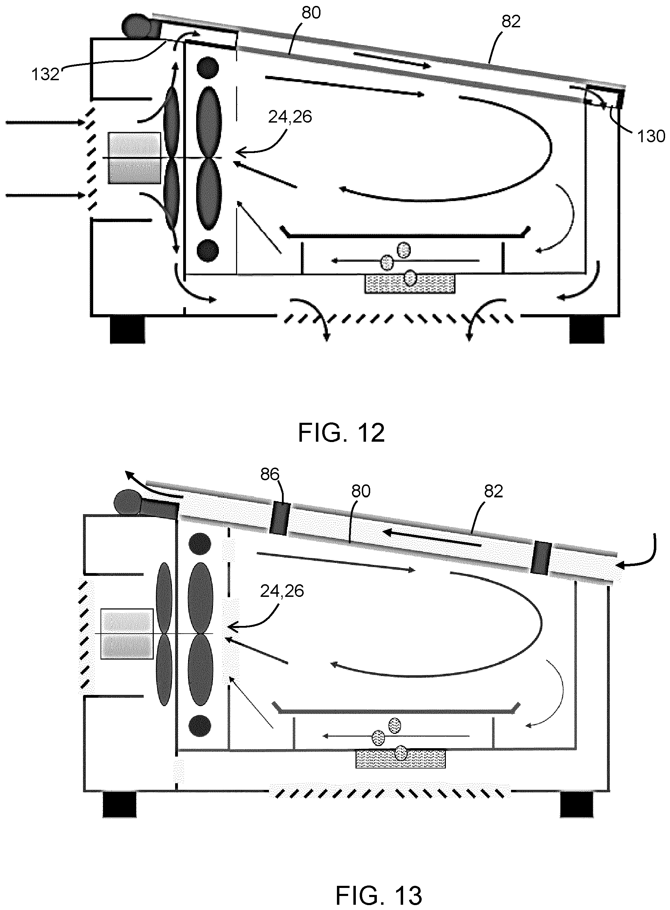

Fig. 12 shows a modification to Fig. 11 in which there is again an internal opening 130 adjacent the front wall area and an internal opening 132 adjacent the rear wall area. The main circulation system 24, 26 creates the forced airflow through the lid air spacing. The cooling air is again driven into the rear part of the lid, along the lid towards the front part and routed to the base of the cooking apparatus.

Fig. 13 shows an example in which the lid air spacing is present all around the outer periphery of the lid. The lid thus has the second plate 82 suspended above the first (inner) plate at a distance. The second plate 82 functions as a shield and is cooled by the free flow of air between the two plates. The frame 86 then becomes a spacer arrangement for spacing the glass plates, rather than sealing the space between them (around their outer peripheries).

In another example, instead of using a ventilation system, the space between the first and second plates layers could be hermetically sealed to block heat-transmission by using an evacuated space or an isolating gas such as argon, krypton or xenon.

In another example, a third or further transparent plate can be mounted in the space between the first and second plates. Thus, a multiple layer sandwich structure may be formed. A transparent temperature isolating material may be provided in one or more of the spaces between the adjacent pairs of plates, such as a silicone gel, other insulating gel, or indeed, a liquid, gas or resin.

In the examples above, the fan 24 delivers hot air (after passing the heater 18) directly to the inner surface of the lid, through the delivery vent. The air is then guided along the lid, and this flow assists in maintaining a clear view through the lid. However, the hot air requires increased insulation properties of the lid compared to conventional cookers which are bottom-heated. Thus, the lid design enables the clear view to be maintained while coping with the increased temperatures at the inner surface of the lid.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A steam cooking apparatus (10), comprising:
a food chamber (12);
a lid (13);
a heating arrangement (16, 18);
a water reservoir (20);
a circulation system (24, 26) comprising an extraction vent (50) through which air is drawn from inside the food chamber, and a delivery vent arrangement (52) for delivering air to the food chamber,
wherein the delivery vent arrangement (52) is formed between the extraction vent (50) and the lid (13) in the vertical direction.

2. The apparatus of claim 1, wherein:
the lid (13) is a transparent lid, and preferably comprises a first, inner glass, plate (80) and a second, outer, glass plate (82), the first and second plates (80,82) preferably are between 2mm and 5mm thick.

3. The apparatus of any one of claims 2, wherein the outer surface of the second plate (82) is flat.

4. The apparatus of claim 2 or 3, wherein the first and second glass plates (80, 82) are separated by an air spacing (84), preferably of at least 5mm thick, preferably being ventilated.

5. The apparatus of any one of claims 2 to 4, comprising a lid frame (86) to which the first and second plates are fixed.

6. The apparatus of claim 5, comprising a seal (90) around the first plate which holds the first plate to the lid frame, wherein the seal has a lower lip (94) for sealing a top opening of the food chamber.

7. The apparatus of claim 6, wherein the lower lip (94) of the seal is adapted to release overpressure in the food chamber.

8. The apparatus of any one of claims 2 to 7, wherein the lid has a spring loaded hinge (60) for coupling to the food chamber and a latch arrangement, and the second plate (82) has an actuation area (70) for touching by a user to open the lid by releasing the latch arrangement and to close the lid.

9. The apparatus of any one of claims 1 to 8, wherein the food chamber (12) comprises a base (40), a rear wall area (42), first and second opposing side wall areas (46,48) and a front wall area (44), wherein the extraction vent (50) is in the rear wall area.

10. The apparatus as claimed in claim 9, wherein the lid (13) is inclined downwardly, e.g. from the rear wall area towards the front wall area, or from one side wall area to the other side wall area.

11. The apparatus of any one of claims 4 to 10, wherein the air spacing (84) has an external opening (120) adjacent a front wall area or a first side wall area, and an external opening (122) adjacent a rear wall area, respectively a second side wall area, to create a convection airflow through the lid air spacing.

12. The apparatus of any one of claims 4 to 10, wherein the air spacing (84) has an internal opening (130) adjacent a front wall area or a first side wall area, and an internal opening (132) adjacent a rear wall area, respectively a second side wall area, and the circulation system (24,26;134) is for creating a forced airflow through the lid air spacing.

13. The apparatus of any one of claims 4 to 10, wherein the air spacing (84) is present all around the outer periphery of the lid.

14. The apparatus of any one of claims 2 to 13, wherein the first plate (80) comprises a reflecting coating for reflecting infrared radiation.

15. The apparatus as claimed in any one of claims 1 to 14, comprising a feed arrangement (23) for providing water from the water reservoir into contact with a heated surface of the heating arrangement, more particularly of a first heater of the heating arrangement.
